# FASCICULE DE BREVET EUROPEEN

(11) **EP 2 838 712 B1**
(45) Date de publication et mention de la délivrance du brevet: **29.06.2016**
(21) Numéro de dépôt: 13720778.3
(22) Date de dépôt: 12.04.2013
(51) Int. Cl.: B29C 73/26, B24C 1/04, G01N 21/88

(54) **PROCEDE ET SYSTEME D'USINAGE PLI A PLI D'UNE PIECE EN MATERIAU COMPOSITE PAR APPORT D'ENERGIE**
VERFAHREN UND SYSTEM ZUR SCHICHTWEISEN BEARBEITUNG EINES BAUTEILS AUS EINEM VERBUNDWERKSTOFF DURCH ENERGIEZUFUHR
METHOD AND SYSTEM FOR THE PLY-BY-PLY MACHINING OF A COMPONENT MADE OF COMPOSITE MATERIAL, BY APPLYING ENERGY

(30) Priorité: 20.04.2012 FR 1253665
(43) Date de publication de la demande: 25.02.2015
(73) Titulaire: Jedo Technologies, 31682 Labege (FR)
(72) Inventeur: DELERIS, Michel, F-31320 Rebigue (FR); CENAC, François, F-31570 Saintefoy d'Aigrefeuille (FR)
(74) Mandataire: Junca, Eric
(86) Numéro de dépôt international: PCT/EP2013/001066
(87) Numéro de publication internationale: WO 2013/156124

(56) Documents cités:
- WO-A1-2011/018163
- DE-C1- 3 702 250
- US-A- 5 281 798
- US-A1- 2010 316 458

## Description

### DOMAINE TECHNIQUE

L'invention se rapporte à un procédé d'usinage pli à pli de pièces en matériau composite dans le cadre d'une mise en oeuvre par toute technologie d'usinage qui apporte la quantité d'énergie appropriée pour retirer un volume de matière donné, en particulier par jet d'eau à haute pression. L'invention se rapporte également à un système d'optimisation apte à mettre en oeuvre un tel procédé.

L'invention s'applique aux panneaux de caisson, de cadres ou de parois, destinés en particulier mais pas exclusivement à l'industrie aéronautique. L'invention concerne en particulier, mais non exclusivement, la réparation de ces panneaux. Elle s'applique aussi aux usinages de forme de ces panneaux, à plis constants.

Le matériau composite est de manière générale constitué d'un empilement de plis de fibres imprégnées de résine - fibres de carbone, de verre, de kevlar ou équivalent - orientées selon des directions différentes d'un pli au pli suivant. Les plis sont imprégnés d'une résine afin de former un ensemble présentant une grande solidité quelle que soit l'orientation des contraintes.

Cependant, ces panneaux sont particulièrement exposés et peuvent subir des chocs, en particulier par des impacts au sol, ou des malformations créés en fabrication. Ces défauts s'étendent dans les plis et leur réparation est particulièrement importante du fait de la tenue mécanique garantie par ces structures.

En ce qui concerne la réparation, plusieurs techniques existent. Une technique conventionnelle consiste à renforcer la zone endommagée par une plaque métallique collée et rivetée. Cette technique est rapide mais présente l'inconvénient majeur de provoquer de la turbulence générant des défauts d'écoulement d'air et donc des perturbations aérodynamiques, du fait que la pièce rapportée ne présente pas la même géométrie et modifie le dimensionnement aérodynamique.

### ÉTAT DE LA TECHNIQUE

Une technique plus évoluée consiste à retirer de la matière autour de la zone endommagée en formant des marches ou gradins concentriques entre les plis successifs à l'aide d'un système d'apport d'énergie, par exemple de jet d'eau sous pression. La zone ainsi évidée est recréée par polymérisation de nouveaux plis de géométrie adaptée. La pièce de matériau composite de réparation vient alors épouser le contour des bords de la zone évidée.

Cette technique nécessite une grande adaptabilité pour ne pas subir les contraintes, non quantifiables au préalable, résultant des singularités des matériaux telles que les relaxations, les reprises de plis (décalage,...), les endommagements à réparer, la variabilité dans l'épaisseur des plis (défauts internes), ou la présence de différents matériaux.

Afin d'adapter la quantité de matière à traiter, l'évidement se fait alors généralement par usinage à la main : des plis crus imprégnés de résine époxy sont ajoutés pli à pli et le durcissement de la résine est ensuite réalisé à température ambiante ou accéléré par un traitement thermique ou autre suivant la nature de la résine.

Cependant, cet usinage manuel est difficilement reproductible et est fortement pénalisant en temps. Différentes technologies se sont donc développées afin d'automatiser cet usinage, telles que le jet d'eau abrasif, le laser, les outils coupants ou les ultrasons. Ces évidements pilotés par des usinages à profondeur constante sont alors réalisés. Mais ces évidements sont difficilement adaptables aux singularités visés plus haut.

Parmi les défauts rencontrés au sein des matériaux composites, la formation de « wrinkles » (rides en terminologie anglaise) est courante: ces rides proviennent de la formation de plis d'épaisseur variable. De plus, des contraintes internes aux matériaux composites, induites pendant la fabrication, rendent variable la géométrie de la pièce avant, pendant et après usinage. Ces variations de géométrie pénalisent l'utilisation d'outils de forme, tels que l'usinage conventionnel, car ils nécessitent une connaissance précise de la géométrie de la pièce.

Le document WO 2011/018163 A1 décrit un procédé et un système d'usinage pli à pli de défauts d'une pièce en matériau composite composé d'un empilement de plis selon les préambules des revendications 1 et 8.

### 5 EXPOSÉ DE L'INVENTION

L'invention vise à réaliser un usinage optimisé pli à pli de pièces composites capable de piloter automatiquement une profondeur variable dépendante des singularités et autres défauts ou endommagements, et donc de réaliser des usinages à pli constant. En d'autres termes, l'invention vise à permettre une adaptabilité de la quantité de matière à retirer, tout en assurant une reproductibilité de l'usinage avec un système automatique d'apport d'énergie. Pour ce faire, il est proposé d'identifier les plis, les défauts et leur typologie par une analyse d'image des zones balayées et de régler les paramètres de vitesse d'usinage en fonction de cette identification pour éliminer les défauts par compensations successives convergentes de l'usinage des plis sur les zones balayées.

Plus précisément, la présente invention a pour objet un procédé d'usinage pli à pli d'une pièce en matériau composite, composé d'un empilement de plis, par un apport d'énergie par flux selon un balayage par zone de la pièce à usiner. Dans ce procédé, une détection d'au moins un flux de lumière réfléchi sur les zones usinées par balayage de la pièce fournit des niveaux de brillances locales correspondant à des orientations de plis. Au moins un paramètre de pilotage de la variation de profondeur de matière à usiner est alors indexé en fonction des plis de la pièce détectés dans les zones balayées par leur niveau de brillance et de leur position relative par rapport à un niveau d'interface entre plis. L'indexation est calibrée sur des incréments prédéfinis dans un intervalle encadrant une valeur de référence et correspondant à des degrés de profondeur de retrait de matière, de sorte que les niveaux de brillance des balayages convergent vers une uniformisation de brillance à pli constant.

Par «zones balayées », il convient d'entendre les unités de surface successivement usinées au cours d'un balayage de surface d'un panneau, ainsi que les zones obtenues successivement par l'usinage d'une même unité de surface réalisé par les balayages successifs de la surface du panneau. De même, « balayages successifs » s'entend des pas de balayage (un pas correspondant à une longueur de balayage sur une même ligne) réalisés successivement pour couvrir la surface d'un panneau, ou bien des pas de balayages réalisés localement pour retirer successivement de la matière sur une même ligne.

La convergence de l'usinage vers un état de surface sans défaut fourni par les données de brillance du modèle de correspondance est ainsi réalisée par une adaptation d'au moins un paramètre de variation de profondeur de matière usinée, tel que la vitesse de balayage, le débit d'abrasif, le pas de balayage, l'intensité électrique de commande du flux d'énergie ou la pression fournie par l'apport d'énergie. Cette convergence se traduit par une diminution de l'écart des données de brillances lumineuses dudit balayage et des données de correspondance du modèle.

Selon des mises en oeuvre avantageuses :
- une comparaison entre des niveaux de brillance de la surface usinée par le balayage précédent et des données de correspondances typologiques prédéterminées sélectionne et/ou actualise une typologie et des indexations de vitesse adaptés à cette typologie pour le balayage suivant;
- les indexations du paramètre de pilotage d'un balayage donné sont comparées aux indexations du balayage précédent, et un arrêt du flux d'énergie peut être déclenché si localement une variation d'indexation entre les balayages dépasse un écart plafond donné, de préférence lorsque cette variation correspond à un changement de niveau de brillance d'au moins un pli;
- la valeur de référence du paramètre de pilotage est modifiable pour un balayage donné en partant de la valeur nominale de retrait d'un pli de matière en fonction des indexations réglées pour au moins un pas de balayage précédent ;
- la détection de flux lumineux est polarisée afin de fournir des détections de brillance suffisamment contrastées pour élaborer des données de niveaux de brillance localisées en minimisant le risque d'erreur pour différentes orientations du flux de lumière.
- un arrêt du flux d'apport énergétique est déclenché lorsque la valeur du paramètre de pilotage est localement réglée sur une valeur située en dehors d'un intervalle prédéfini.

L'invention se rapporte également à un système d'usinage pli à pli de défauts d'une pièce en matériau composite, apte à mettre en oeuvre un tel procédé. Ce système comporte une unité de traitement numérique de données en liaison avec une commande de balayage d'une machine d'apport d'énergie par flux dans des zones à usiner, et un ensemble de formation d'images. Cet ensemble comporte au moins une source lumineuse agencée pour émettre un flux de lumière pouvant être réfléchi par une surface usinée de la pièce selon au moins deux angles différents par rapport à une référence d'orientation des fibres de chaque pli, ainsi qu'un moyen de prises de vues de la surface de la pièce ainsi éclairée en liaison avec l'unité de traitement de données pour fournir des niveaux de brillance. L'unité de traitement comporte des moyens de régulation d'indexation des vitesses de balayage locales de la pièce, les vitesses variant dans un intervalle déterminé de sorte que les niveaux de brillance des balayages successifs, fournis par l'ensemble de formation d'images, convergent vers une uniformisation de brillance correspondant à une même profondeur en « unité pli » de la zone usinée. Cette « même profondeur » peut être définie comme un niveau à pli constant coïncidant avec une même interface entre deux plis.

Selon des modes de réalisation préférés :
- l'unité de traitement numérique comporte des moyens de comparaison entre des niveaux de brillance de la surface usinée par le balayage précédent et des données de correspondances typologiques prédéterminées, les données de correspondances et de niveaux de brillance après chaque balayage étant stockées dans des modules de mémoire de l'unité de traitement ;
- une bibliothèque de modèles d'états de plis de pièces fournit un modèle de référence semblable à la pièce traitée selon les brillances détectées après les premiers balayages, le modèle étant transmis à la mémoire de données de correspondances typologiques de l'unité de traitement numérique;
- le moyen de prises de vues est un appareil photographique numérique, qu'au moins deux photographies étant déclenchées pour deux angles d'orientation de la source correspondant à deux orientations de fibres de plis de la pièce;
- le moyen de prises de vues comporte au moins un objectif équipé d'un filtre polarisant.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, un schéma fonctionnel du système de mise en oeuvre du procédé selon l'invention sous forme de diagramme fonctionnel;
- la figure 2, une vue en coupe schématisée d'un profil de balayage d'un exemple d'usinage de plis d'un panneau en fonction d'une interface de plis à atteindre ;
- la figure 3, un premier schéma en coupe (a0) d'un panneau en matériau composite avant traitement et des schémas en coupe (a1), (b1), (c1) et en vues supérieures (a2), (b2), (c2) de ce panneau dans un exemple simplifié de traitement selon l'invention sur une profondeur de trois plis ;
- la figure 4, des vues supérieures schématisées (a1 à a3, b1 à b3, c1 à c3) d'un exemple d'usinage de plis d'un panneau par trois balayages successifs, accompagnées de schémas de profils des balayages (a4, b4, c4) et des indexations de vitesses de balayage correspondantes (a5, b5) ;
- la figure 5, une vue en coupe (a) et en vue supérieure (b) d'un panneau composite à bord courbé traité classiquement avec un premier balayage à vitesse constante ; et
- la figure 6, une vue en coupe (a) et en vue supérieure (b) du panneau composite à bord courbé de la figure 7, traité conformément à l'invention avec un deuxième balayage à vitesse variable.

### DESCRIPTION DÉTAILLÉE

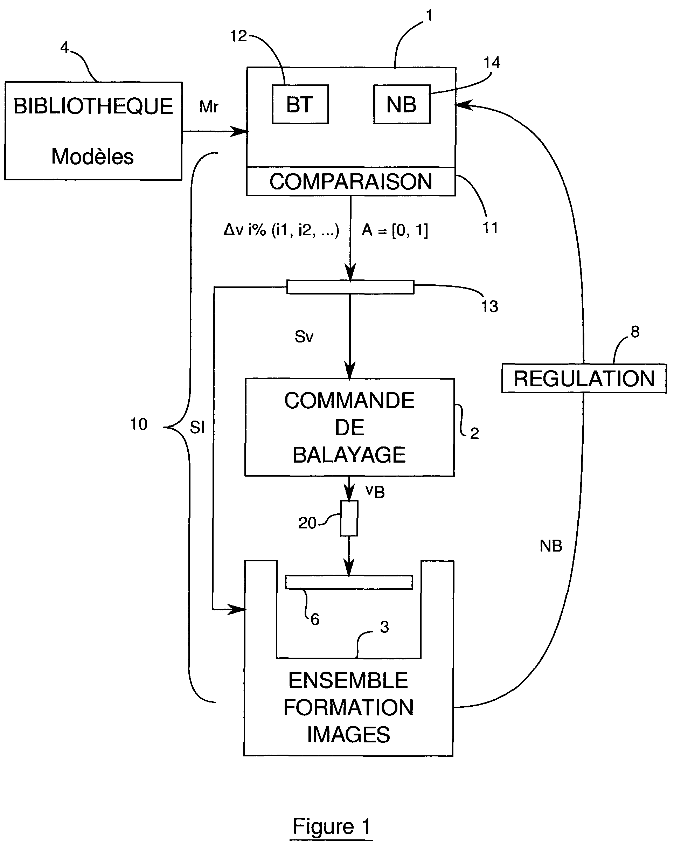

En référence au diagramme de la figure 1, un système 10 selon l'invention comporte une unité de traitement numérique de données 1 équipé d'un processeur et de mémoires. Cette unité fournit un signal de vitesse Sv de balayage à une commande de balayage 2 d'une machine de jet d'eau abrasive à haute pression 20. La vitesse de balayage est, dans cet exemple non limitatif, le paramètre utilisé pour faire varier la profondeur d'usinage. Un ensemble de formation d'images numériques 3 d'une surface de panneau 6 en matériau composite à usiner est également commandé en signaux SI d'orientation et émission lumineuse par l'unité de traitement numérique 1. Cet ensemble de formation d'images numériques 3 fournit des niveaux de brillance NB de la surface du panneau éclairée à l'unité de traitement de données 1.

Cette unité de traitement 1 délivre des indexations d'incréments i% pour élaborer le signal de vitesse Sv par réglage de potentiomètres 13. La commande 2 reçoit le signal Sv et fournit des signaux de vitesses locales de balayage v_{B} à la machine 20. Les incréments i% (i1, i2, ...) sont définis en pourcentages d'une vitesse de référence v₀ égale, en principe, à la vitesse nominale apte à retirer la matière correspondant à la profondeur d'un pli, par exemple 0,2 mm. Cependant, la vitesse de référence est modifiable pour tenir compte de l'ensemble des incréments de vitesse d'un pas balayage précédent, par exemple de leur valeur moyenne, lorsque cet ensemble s'écarte sensiblement de la valeur nominale. Cette réinitialisation de la vitesse de référence, réalisable à chaque pas, permet alors de suivre l'évolution de l'ensemble des incréments en continuant à utiliser directement tous les incréments à disposition pour le pas suivant, en particulier les incréments extrêmes (200%, 150% ; 50%, 30%). Cette réinitialisation permet donc d'éviter des balayages supplémentaires qui, sinon, sont à prévoir pour aboutir un retrait de matière correspondant à des incréments extrêmes qui ne seraient plus directement à disposition.

Dans les exemples non limitatifs ci-dessous, les bornes d'incrémentation de la vitesse v_{B} sont 50% ou 30% pour la borne basse et le double (200%) pour la borne haute.

L'indexation du signal de vitesse Sv est en fait régulée par l'application d'une itération convergente 8 générée par les données de niveaux de brillance NB fournis par l'ensemble de formation d'images 3, correspondant à une profondeur de retrait de matière du balayage précédent. Par comparaison après chaque balayage, entre ces niveaux de brillance NB et les niveaux de brillance d'une typologique de défaut identifiée et correspondant à l'un des modèles de référence Mr, l'unité de traitement 1 sélectionne les incréments de vitesse i% à appliquer localement. Les données de correspondances brillances/typologies BT et des niveaux de brillance mesurés NB sont stockées dans des modules de mémoire de données 12 et 14 de l'unité de traitement 1 et fournies aux moyens de comparaison 11.

Avantageusement, les vitesses indexées pour un balayage donné sont également comparées dans les moyens de comparaison 11 aux vitesses qui ont été indexées au balayage précédent pour une même localisation. Si, pour une localisation de surface de panneau donnée, la variation d'indexation des vitesses est supérieure à un écart plafond donné Δv, ici 200% de la valeur de référence v₀, un signal d'arrêt A du flux de jet d'eau est déclenché (A = 1). Par exemple, la présence d'un défaut important peut provoquer la mise à nu d'un pli situé à deux unités pli sous le pli usiné. Dans ce cas, le signal d'arrêt A stoppe le jet abrasif pour la zone correspondante.

Ces moyens de comparaison sélectionnent les incréments de vitesse correspondant aux degrés de profondeur en nombre entier de plis, de demi-plis ou de fractions de plis de matière à retirer localement pour atteindre une interface de plis en fonction de la typologie de défaut identifiée. La convergence est quantifiée par le nombre de balayages correspondant. Cette détermination tient compte de variations de vitesse locales Δv à ne pas dépasser entre deux balayages. Des exemples de convergence des niveaux de brillance sont donnés ci-dessous.

L'ajustement de la vitesse peut être réglé pour satisfaire un compromis entre la précision de l'usinage, dépendant des dimensions de découpage en zones à usiner, et la durée de l'opération, en favorisant l'une ou l'autre ou en adoptant une position médiane entre précision et durée. La convergence peut alors être quantifiable en nombre d'itérations à réaliser, par exemple sur trois, quatre ou cinq balayages par défaut, pour satisfaire au compromis.

Des modèles de référence Mr peuvent être fournis par une bibliothèque 4 à la mémoire 12 des correspondances BT avec des états de brillance variables des marches de panneaux en fonction des différents types de défauts traités. Cela permet de choisir le modèle de référence Mr pour le panneau à traiter par comparaison des brillances apportées par les premiers balayages. Ce modèle peut être changé au cours du traitement si une divergence se confirme par un résultat de brillance contraire au modèle. Les moyens de comparaison 11 de l'unité de traitement numérique 1 déclenchent un signal d'arrêt A = 1 du système 10 lorsque la divergence est confirmée, par exemple pour deux balayages successifs. Si la convergence est globalement respectée, par exemple pas plus d'une divergence sur cinq balayages, aucun n'arrêt n'est déclenchée (A = 0).

La brillance d'un pli est mesurée par l'intensité lumineuse d'un flux réfléchi par le pli. Cette intensité est obtenue par une analyse de la lumière réfléchie à partir d'une image prise par un appareil photographique numérique

Plus précisément, la vitesse de balayage est inversement proportionnelle à la quantité de matière retirée et donc à sa profondeur. L'intervalle de vitesses est donc directement lié à l'intervalle de profondeur de pli pouvant être retirée par le balayage courant, qui est ainsi compris, dans l'exemple décrit ci-dessous, entre ½ 2 et 2 plis lorsque la vitesse varie respectivement entre 2 fois et la moitié de la vitesse de référence.

La vitesse de balayage v_{B} est alors indexée localement sur l'un des incréments i₁, i₂, ..., (exprimés en %) - classés de manière décroissante en fonction de configurations de plis prédéterminées. Pour un balayage courant Bₙ, la comparaison entre des données de configuration, en particulier des niveaux de brillance NB du balayage précédent Bₙ₋₁ et des données de correspondances typologiques prédéterminées BT, permet à l'unité de traitement 1 de sélectionner, pour le balayage courant, une typologie et de l'actualiser si elle a déjà été sélectionnée, ainsi que des indexations de vitesse v_{B} les plus adaptés à la typologie sélectionnée ou actualisée.

Les données de configuration se rapportent au niveau de brillance NB de la surface et, de préférence, également aux données de balayage, en particulier aux incréments de vitesse indexés au(x) balayage(s) précédent(s). Avantageusement, d'autres données plus précises de profondeur de retrait dans le pli concerné par le balayage courant permettent d'affiner la sélection à partir d'un plus grand nombre d'incréments. Ces données de profondeur sont par exemple fournies par un scanner laser 3D. Les données de correspondances concernent ici des correspondances brillances/typologies BT. Ces données BT sont avantageusement enrichies au cours de l'opération par l'historique de l'usinage qui corrige la typologie sélectionnée ou change de typologie.

L'indexation des incréments de vitesse est déterminée par le degré de précision acquis au fur et à mesure de l'usinage. La vitesse est d'abord indexée sur l'incrément maximal i₁, afin de retirer le minimum de matière. Cette situation résulte d'une information de niveau de brillance NB peu précise qui, comparée aux données de correspondance brillances/typologies BT- par exemple en début de traitement - ne permet pas à l'unité de traitement 1 de régler cette valeur sur un incrément plus fin. Mais au cours de l'usinage des plis, la vitesse de balayage adopte progressivement des incréments ajustés, par exemple plus proches de 100%, car les comparaisons successives de niveaux de brillance permettent d'ajuster au plus près la profondeur d'usinage pour tendre vers une même interface entre plis. La vitesse de balayage v_{B} converge alors globalement et de manière incrémentale vers la vitesse nominale v₀ afin de poursuivre l'usinage pli à pli : l'écart entre la vitesse de balayage et la vitesse nominale tend globalement vers 0 pour chaque défaut.

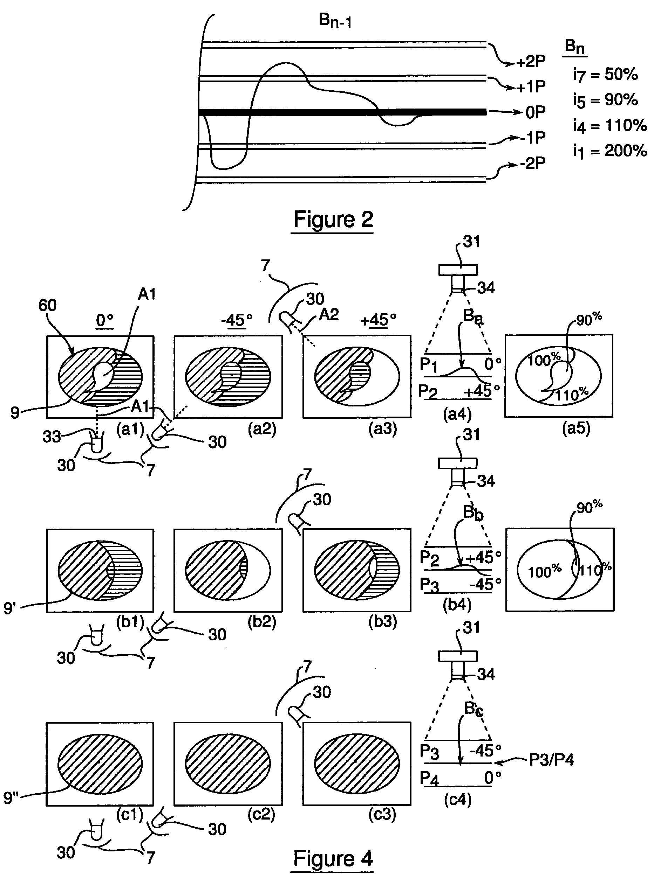

Dans l'exemple d'usinage illustré par la coupe schématique de la figure 2, le profil indiqué Bₙ₋₁ est celui du balayage précédent. Il correspond à un retrait de matière sur les plis en profondeur croissante +2P, +1P et -1P, -2P repérés respectivement au-dessus et en-dessous de l'interface 0P inter-plis +1 P/-1P, qui est le type de niveau d'interface à atteindre après un nombre de balayages supplémentaire approprié pour corriger le défaut par usinage successif. Les plis ont été repérés par leur niveau de brillance, pli à pli, sans faire intervenir de données plus précises sur les degrés de profondeur de retrait de matière dans chaque pli.

L'analyse de brillance du profil de balayage Bₙ₋₁ indique des profondeurs d'usinage au niveau du pli -2P, +2P, +1P et -1P. La vitesse de balayage pour le balayage à effectuer au balayage suivant Bₙ est réglée :
- au niveau du pli -2P, sur l'incrément le plus élevé, ici i₁ = 200%, afin de retirer le moins de matière possible pour se rapprocher au plus vite de l'interface visée ;
- au niveau du pli -1P, la vitesse est incrémentée sur une valeur supérieure à la vitesse nominale, par exemple i₄ = 110%, afin de retirer moins d'un pli de profondeur pour atteindre l'interface ;
- pour les niveaux +2P et +1P, la vitesse est indexée sur des incréments inférieurs à 100% de la vitesse nominale, de façon à retirer plus de matière qu'un pli : au niveau +2P, la vitesse est incrémentée à i₇ = 50% et, au niveau +1P, à i₅ = 90% de la vitesse nominale.

Au cours de l'opération, les informations de brillance NB comparées aux informations de correspondance en typologie BT (figure 1) permettent d'augmenter la fiabilité du procédé par l'utilisation, à chaque balayage, de l'incrément le plus adapté. L'unité de traitement 1 génère alors des signaux Sv de commande de vitesses de balayage qui tendent vers le signal de vitesse de référence v₀ avec des indexations d'incréments successifs qui convergent globalement vers 100%.

Lorsque les données de brillance sont croisées avec des données de profondeur de pli, fournies par exemple par le scanner laser 3D, le degré de profondeur de pli retiré est quantifié, par demi-li ou par fractions de pli. Le réglage de la vitesse de balayage peut alors être affiné en multipliant le nombre d'incréments correspondants à ces fractions de pli. Le nombre de plis nécessaire à la convergence est globalement diminué.

Par exemple, la vitesse de balayage, qui est incrémentée en début d'opération sur une seule valeur élevée : 200% pour la détection d'un pli de niveau une fois (tel que -1 P) ou deux fois (tel que -2P) inférieur au niveau de référence 0P est assignée, respectivement, sur plusieurs valeurs ajustées en cours d'opération pour ces mêmes plis: i₁ = 200, i₂ = 150, i₃ = 130 et i₄ = 110% pour la détection d'un pli de niveau deux ou une fois inférieur ; i₅ = 90%, i₆ = 70, i₇ = 50 et i₈ = 30, pour la détection d'un pli de niveau une ou deux fois supérieur. Toutes ces valeurs sont préréglées dans l'unité de traitement 1.

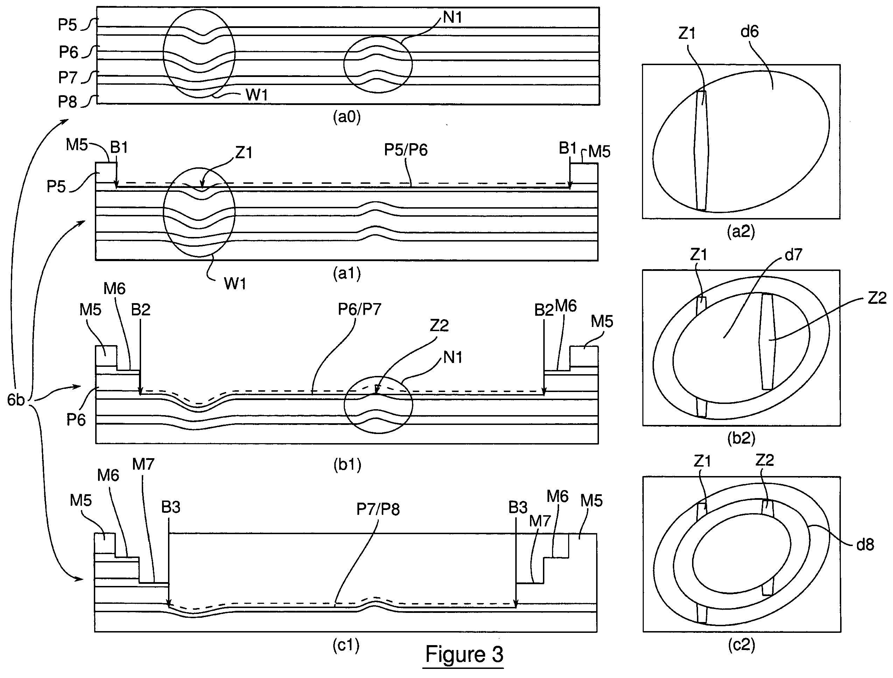

Dans le cadre de défauts de type « wrinkle » ou « nervure », le schéma (a0) de la figure 3 illustre la vue en coupe d'un panneau 6b en matériau composite. Les plis P5 à P8 de ce panneau 6b comporte des défauts sous la forme d'un wrinkle W1 et d'une nervure N1. les schémas (a1, a2) à (c1, c2) de la figure 3 illustrent respectivement des vues en coupe et supérieures du panneau 6b dans un exemple simplifié de traitement selon l'invention. Le traitement est basé sur la reconnaissance des plis et le suivi des défauts, sur une profondeur formant des gradins concentriques sur quatre plis.

Sur le schéma (a1), un premier balayage B1 du jet d'eau abrasif et vitesse constante v1, élimine le premier pli P5 à profondeur constante selon un disque central en formant une marche M5. Au moins un défaut a été détecté par une première analyse de brillance d'image et un choix de modèle de référence pour ce défaut. Le schéma (a2) en vue supérieure montre mieux le disque central d6 de l'interface de plis P5/P6 correspondant à un premier retrait de matière de pli P5. L'analyse de brillance identifie une zone Z1 de brillance différente du reste du disque d6 et correspondant typologiquement à la présence d'un wrinkle W1 formé dans les plis. Du fait de ce défaut, le premier pli P5 n'a pas totalement disparu localement au niveau de la zone Z1 lors de l'usinage à profondeur constante du premier pli P5.

Le deuxième balayage B2 (schémas b1 en coupe et b2 en vue supérieure) forme un évidement en gradins concentriques (marches M5 et M6) et tient compte des enseignements fournis lors du premier balayage B1 : l'unité de traitement numérique 1 (Figure 1) compare la brillance de la zone Z1 du premier balayage B1 avec celle d'un modèle de wrinkle W1 stocké de même type. L'état successif des plis de ce wrinkle correspondant à cette brillance est ainsi identifié. Cet état induit que le degré de profondeur de pli P5 restant tel que repéré par sa brillance est de l'ordre = 10% et qu'il est probable que la déformation du pli suivant soit de l'ordre de 30%. L'unité de traitement 1 indexe alors la vitesse à 70% de la vitesse nominale (indexation i₆) à appliquer au deuxième balayage B2 lorsque le jet d'eau abrasif survole précisément la zone Z1, en liaison avec la commande de balayage 2 (cf. Figure 1). Cette zone est usinée et tout le pli P6 est éliminé dans une zone de balayage de disque central d7. Après avoir vérifié que le pli P6 est bien éliminé par un niveau de brillance uniforme, l'indexation est réglée à 100% de la vitesse nominale v₀.

Par ailleurs, le deuxième balayage B2 fait apparaître une nouvelle zone Z2 de brillance contrastée par rapport à celle du reste du disque central d7 correspondant à l'interface de plis P6/P7, le disque d6 apparaissant maintenant sous la forme d'une couronne (schéma b2). Par comparaison de brillance avec un modèle de défaut en nervure N1 et, compte tenue de la différence de brillance de la zone Z2 avec celle de la zone Z1 du défaut W1, l'unité de traitement identifie l'état du pli P7 correspondant et la présence de fibres du pli P7 dans cette zone Z2. Par ailleurs, l'interface P6/P7 a bien été atteinte car la brillance a disparu dans le disque d7.

Ces enseignements sont utilisés dans les indexations de vitesse du troisième balayage B3 (schéma c1 et c2). L'unité de traitement indexe une vitesse de 110% (incrément i₄) pour le retrait de tout le pli P7 sur une profondeur inférieure à un pli dans la zone du wrinkle W1, du fait que le modèle de wrinkle prévoit une diminution du défaut selon cet ordre de grandeur. Elle prévoit également une vitesse de balayage indexée sur 110% à appliquer sur une profondeur inférieure à un pli lorsque le jet d'eau abrasif survole la zone Z2 afin d'atteindre et de rester dans l'interface de plis P7/P8. Après passage du troisième balayage, le disque central d8 (schéma c2) correspond à l'interface de plis P7/P8, sans défaut apparent.

Les schémas (a1) à (a3), (b1) à (b3) et (c1) à (c3) de la figure 4 illustrent, dans un exemple simplifié, le suivi des niveaux de brillance NB pour reconnaître les plis. Le contrôle des niveaux de brillance d'une surface de panneau en matériau composite 60 est effectué pour respectivement trois balayages d'usinage et, pour chaque balayage, selon trois angles d'exposition 0°, -45° et +45°. Après avoir atteint l'interface inter-plis P3/P4, l'usinage est poursuivi pli à pli suivant la même méthode, après l'élimination du défaut s'étalant sur les plis P1 à P3. Pour simplifier, cette convergence est réalisée par l'exécution de ces trois balayages. Les schémas (a4), (b4) et (c4) montrent en coupe les profils de balayage, la prise de vues par un appareil photographique 31, et les plis successivement usinés après chacun des trois balayages successifs Ba, Bb et Bc. De plus, les schémas (a5) et (b5) montrent les incréments de vitesse indexés pour les balayages Bb et Bc.

L'ensemble de formation d'images comporte une source lumineuse 30 montée sur un support rotatif 7 et un appareil de photographie numérique 31 situé au-dessus du panneau. Pour améliorer la précision de détection de l'orientation des fibres des plis, l'objectif est équipé d'un filtre polarisant 34 monté sur une bague rotative (non représentée). Une telle détection est alors suffisamment précise pour définir des zones de brillance (voir ci-après) sur chaque balayage, ce qui permet un usinage de réparation ou de correction de défaut extrêmement fin.

Cet appareil 31 est disposé au-dessus de la surface du panneau 6 de sorte que son axe optique A1 est perpendiculaire au panneau 6. La source 30, son axe optique A2 et le flux lumineux 33 issu de la source 30 sont orientés successivement selon les trois directions 0°, -45° et +45° après chaque balayage. Les plis de plus en plus profonds qui se succèdent - P1, P2, P3 et P4 - sont orientés selon la suite 0°/+45°/-45°/O° par rapport à la même référence angulaire qui sert au repérage des directions de la source 30.

En référence aux schémas (a1) à (a3), il apparaît que le balayage n'a pas tout retiré du pli P1 : une portion de pli supérieur P1, qui réfléchit le flux lumineux 33 orienté à 0°, est visible sur le schéma a1. Le schéma a2 montre qu'aucun pli d'orientation -45° n'est présent à ce niveau de balayage. Le pli P2 lui est repéré par la réflexion du flux lumineux 33 orienté à +45° (schéma a3). De plus, une étendue de résine grisée 6, située à l'interface des plis P1/P2 (schéma a4) apparaît quelle que soit l'orientation. Le schéma a4 confirme bien la cohérence entre les réflexions formées par les plis P1, P2 ainsi que leur interface P1/P2 et le tracé du balayage Ba entre les plis P1 et P2.

A ce stade, l'objectif de converger l'usinage vers une interface de plis n'est pas atteint. Pour y tendre, les vitesses de balayages du prochain balayage Bb (schéma b4) sont indexées sur les incréments (schéma a5), qui permettent de moduler le degré de profondeur de retrait de matière en fonction de la position du pli au-dessus ou en-dessous d'une interface.

Pour le pli supérieur P1, la vitesse est indexée sur un incrément i₅ = 90% correspondant à une vitesse inférieure à la vitesse nominale de retrait d'un pli. Un retrait de matière plus important (d'environ 10%) que celui correspondant à la profondeur d'un pli est donc prévu. Cette indexation va permettre de se rapprocher davantage de la prochaine interface P2/P3 (schéma b4) après le prochain balayage.

Pour le pli inférieur P2, la vitesse est indexée sur un incrément i₄ = 110% correspondant à une vitesse supérieure : le degré de profondeur de retrait de matière prévu est inférieur à un pli afin de se rapprocher de ladite prochaine interface P2/P3 lors du balayage suivant.

Quant à l'étendue de résine 9 située à l'interface P1/P2, il convient de conserver un usinage d'un degré de profondeur égal à un pli afin de retrouver l'interface P2/P3. Une indexation de vitesse de balayage sur la vitesse nominale (indexation de 100%) permet d'atteindre cette interface lors du prochain balayage Bb.

Après l'exécution de ce balayage Bb, conformément aux incréments de vitesse indiqués sur le schéma a5 - à savoir 100% (usinage entre interfaces), 90% (usinage du pli P1) et 110% (usinage du pli P2) - l'usinage obtenu est identifié par la brillance de la surface 60 telle que photographiée selon les orientations 0°, -45° et +45°, conformément aux schémas b1 à b3.

Sur ces schémas, il apparaît que l'usinage a permis de tendre vers l'interface P2/P3 : l'étendue de résine 9' est sensiblement plus importante que celle de la résine 9 de l'interface supérieur P1/P2 (schémas a1 à a3) du fait de l'adaptation des vitesses de balayage par des incrémentations appropriées (90% et 110%) permettant aux usinages des plis P2 et P3 de « rattraper » partiellement l'interface P2/P3 concernée. En corollaire, l'étendue des plis P2 et P3 mise en évidence par l'orientation du flux lumineux 33 à -45° (schéma b2) et +45° (schéma b3) est plus réduite que celle des plis P1 et P2 du balayage précédent (schémas a1 et a3). Ces évolutions se traduisent également sur le profil du balayage Bb (schéma b4) qui se rapproche de l'interface P2/P3.

Les indexations des vitesses de balayage sont maintenues pour le balayage suivant Bc (schéma b5), à savoir 100% (usinage de l'interface P2/P3), 90% (usinage du pli P2) et 110% (usinage du pli P3).

L'exécution du balayage Bc permet de converger l'usinage vers l'interface P3/P4 : outre l'usinage d'un pli (indexation 100% sur la vitesse nominale) de l'interface P2/P3 qui aboutit à l'interface P3/P4, l'usinage du pli P2 avec une vitesse de balayage inférieure à la vitesse nominale (indexation à 90%) - qui usine sur un degré de profondeur supérieur à un pli - permet d'atteindre également l'interface P3/P4. De même, l'usinage du pli P3 avec une vitesse de balayage supérieure à la vitesse nominale (indexation à 110%) - qui usine sur un degré de profondeur inférieur à un pli - permet d'aboutir à l'interface P3/4.

Les schémas c1 à c3 montrent que, quelle que soit l'orientation du flux lumineux 33, une même réflexion de résine 9" à l'interface P3/P4 est obtenue. Le profil d'usinage du balayage Bc tel qu'illustré par le schéma c4 confirme bien le positionnement de ce profil sur l'interface P3/P4.

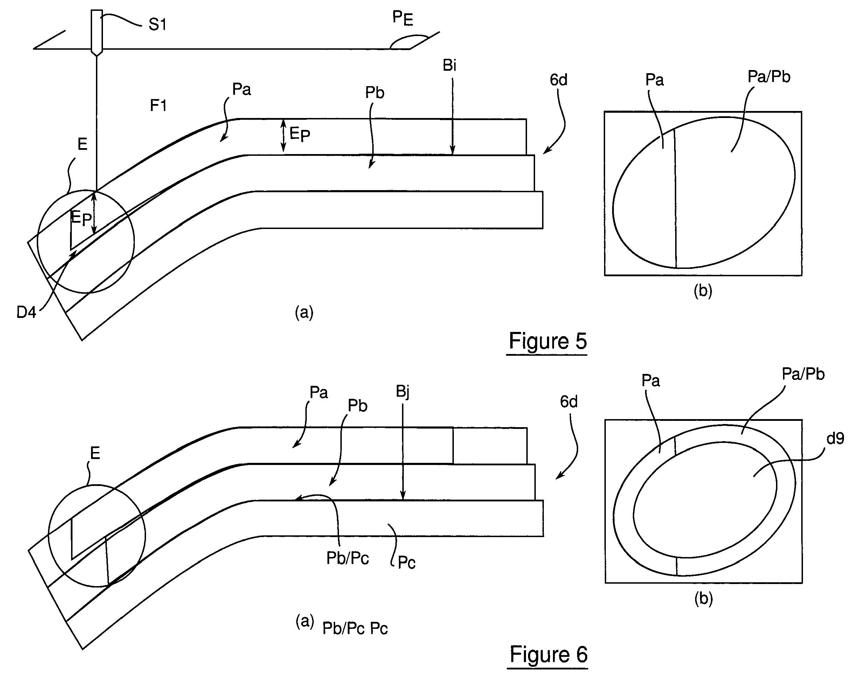

Dans certains cas, l'usinage peut lui-même provoquer l'apparition de singularités à éliminer. Un cas connu concerne les panneaux courbes, tel que le panneau 6d illustré par la figure 5, vu en coupe sur le schéma (a) et en vue supérieure partielle sur le schéma (b). Le principe d'usinage à apport d'énergie provenant d'une source se déplaçant à distance constante, par exemple par jet d'eau à flux F1 provenant d'une buse S1 se déplaçant dans un plan P_{F}, induit un décalage d'usinage progressif lorsque l'usinage est effectué sur des parties inclinées. En effet, la profondeur d'usinage est constante, par exemple sur une profondeur nominale Ep d'un pli. Un défaut D4 de matière non retirée se forme alors en extrémité « E » du panneau 6d lors du retrait du premier pli Pa par un premier balayage Bi de jet d'eau abrasive. La vue supérieure (b) montre la conservation du pli Pa sur une grande partie de la surface, en dehors de l'interface Pa/Pb.

L'invention remédie à ce défaut conformément à la figure 6 qui reprend les vues des schémas (a) et (b) de la figure 5 dans le cadre de l'invention. Le deuxième balayage Bj « gomme » le défaut d'extrémité « E » en diminuant la vitesse par incrémentation à 90% de la vitesse nominale de balayage au niveau de cette extrémité « E ». Plus de matière qu'une profondeur de pli est ainsi retirée pour compenser le manque de retrait de matière du balayage précédent. Il s'en suit que le disque central d9 de l'interface de plis Pb/Pc (vue supérieure (b)) ne présente plus de défaut.

L'invention n'est pas limitée aux exemples de réalisation décrits et représentés. Le procédé selon l'invention peut être totalement, semi ou partiellement automatisé, ou même rester manuel en remplaçant par exemple l'appareil photographique par l'oeil d'un spécialiste. Ainsi, les modèles de référence peuvent être des modèles empiriques basés sur l'expérience visuelle des brillances. De plus, le système d'apport d'énergie peut être autre que le jet d'eau abrasif à haute pression. Il est par exemple possible d'utiliser des systèmes à laser ou par ultrasons.

Par ailleurs, il est également possible de prévoir une caméra ou un appareil photographique arrimé(e) à la machine d'émission de flux d'énergie. Dans ce cas, les niveaux de brillance peuvent être suivies localement sur des zones élémentaires de dimensions aussi faibles que technologiquement possibles. Le réglage des indexations de vitesse peut alors être réalisé pour chaque zone élémentaire avec un retrait de matière ajusté.

## Revendications

1. Procédé d'usinage pli à pli de singularités (W1 ;N1 ; D4) d'une pièce (6, 6b, 6d) en matériau composite composé d'un empilement de plis (P1 à P4 ; P5 à P8 ; Pa à Pc) par un apport d'énergie par flux selon un balayage par zone de la pièce à usiner, **caractérisé en ce qu'**une détection d'au moins un flux de lumière (33) réfléchi sur les zones usinée (Z1, Z2 ; 60) par balayage de la pièce (6) fournit des niveaux de brillances locales (NB) correspondant à des orientations de plis, et **en ce qu'**au moins un paramètre de pilotage (v_{B}) de la variation de profondeur de matière à usiner est alors indexé en fonction des plis de la pièce (6) détectés dans les zones balayées (Z1, Z2 ; 60) par leur niveau de brillance (NB) et de leur position relative par rapport à un niveau d'interface entre plis (OP, P2/P3, P3/P4), l'indexation étant calibrée sur des incréments (i1 à i4 ; i5 à i8) prédéfinis dans un intervalle encadrant une valeur de référence (v0) et correspondant à des degrés de profondeur de retrait de matière, de sorte que les niveaux de brillance des balayages successifs convergent vers une uniformisation de brillance à pli constant.

2. Procédé d'usinage pli à pli selon la revendication 1, dans lequel le paramètre de pilotage est choisi entre la vitesse de balayage (v_{B}), le débit d'abrasif, le pas de balayage, l'intensité électrique de commande de flux d'énergie, et la pression fournie par l'apport d'énergie.

3. Procédé d'usinage pli à pli selon la revendication 2, dans lequel, pour chaque balayage, une comparaison entre des niveaux de brillance (NB) de la surface usinée par le balayage précédent (Bₙ₋₁) et des données de correspondances typologiques prédéterminées (BT) sélectionne et/ou actualise une typologie et des indexations de vitesse adaptés à cette typologie pour le balayage suivant (Bₙ).

4. Procédé d'usinage pli à pli selon l'une des revendications 1 à 3, dans lequel les indexations du paramètre de pilotage d'un balayage donné (Bₙ) sont comparées aux indexations de vitesse du balayage précédent (Bₙ₋₁), et un arrêt (A) du flux d'énergie peut être déclenché si localement une variation d'indexation entre les balayages dépasse un écart plafond donné, de préférence lorsque cette variation correspond à un changement de niveau de brillance d'au moins un pli.

5. Procédé d'usinage pli à pli selon l'une des revendications précédentes, dans lequel la valeur de référence (v₀) du paramètre de pilotage est modifiable pour un balayage donné en partant de la valeur nominale de retrait d'un pli de matière en fonction de l'ensemble des indexations réglées pour au moins un pas de balayage précédent.

6. Procédé d'usinage pli à pli selon l'une des revendications précédentes, dans lequel la détection de flux lumineux (33) est polarisée (35) afin de fournir des détections de brillance suffisamment contrastées pour élaborer des données de niveaux de brillance (NB) localisées en minimisant le risque d'erreur pour différentes orientations (-45, 0, +45) du flux de lumière (33).

7. Procédé optimisé de réparation selon l'une des revendications précédentes, dans lequel un arrêt (A) du flux d'apport énergétique est déclenchée (A = 1) lorsque la valeur du paramètre de pilotage est localement réglée sur une valeur située en dehors d'un intervalle prédéfini.

8. Système d'usinage pli à pli 10) de défauts (W1 ;N1) d'une pièce (6, 6b, 6d) en matériau composite, apte à mettre en oeuvre le procédé selon l'une des revendications précédentes, **caractérisé en ce qu'**il comporte une unité de traitement numérique de données (1) en liaison avec une commande de balayage (2) d'une machine d'apport d'énergie (20) par flux dans des zones à usiner, et un ensemble de formation d'images (3) comportant au moins une source lumineuse (32) agencée pour émettre un flux de lumière (33) pouvant être réfléchie par une surface usinée (60) de la pièce (6, 6b, 6d) selon au moins deux angles différents (-45°, 0°, +45°) par rapport à une référence d'orientation des fibres de chaque pli (-1P, -2P, +1P, +2P ; P1 à P4), ainsi qu'un moyen de prises de vues (31) de la surface (60) de la pièce (6, 6b, 6d) ainsi éclairée et relié à l'unité de traitement de données (1) pour fournir des niveaux de brillance (NB), et **en ce que** l'unité de traitement (1) comporte des moyens de régulation (11, 13) d'indexation des vitesses de balayage locales de la pièce (6, 6a, 6b), les vitesses variant dans un intervalle déterminé (Δv) de sorte que les niveaux de brillance (NB) des balayages successifs, fournis par l'ensemble de prises de vue d'images (3), convergent vers une uniformisation de brillance correspondant à une même profondeur en « unité pli » (0P, P2/P3, P3/P4) de la zone usinée.

9. Système d'usinage pli à pli (10) selon la revendication précédente, dans lequel l'unité de traitement numérique (1) comporte des moyens de comparaison (11) entre des niveaux de brillance (NB) de la surface usinée par le balayage précédent (Bₙ₋₁) et des données de correspondances typologiques prédéterminées (BT), les données de correspondances (BT) et de niveaux de brillance (NB) après chaque balayage étant stockées dans des modules de mémoire (12, 14) de l'unité de traitement (1).

10. Système d'usinage pli à pli selon l'une des revendications 8 ou 9, dans lequel une bibliothèque (4) de modèles d'états de plis de pièces fournit un modèle de référence (Mr) semblable à la pièce traitée par comparaison des brillances détectées après les premiers balayages, le modèle (Mr) étant transmis à la mémoire (12) de données de correspondances typologiques (BT) de l'unité de traitement numérique (1).

11. Système d'usinage pli à pli selon l'une des revendications 8 à 10, dans lequel le moyen de prises de vues est un appareil photographique numérique (31), au moins deux photographies étant déclenchées pour deux angles d'orientation de la source lumineuse (31) correspondant à deux orientations de fibres de plis de la pièce (6).

12. Système d'usinage pli à pli selon l'une des revendications 8 à 10, dans lequel le moyen de prises de vues comporte au moins un objectif équipé d'un filtre polarisant (34).

## Patentansprüche

1. Verfahren zum lagenweisen Bearbeiten von Singularitäten (W1; N1; D4) eines Teils (6, 6b, 6d) aus Verbundmaterial, das aus einem Stapel von Lagen (P1 bis P4; P5 bis P8; Pa bis Pc) gebildet ist, durch einen Energieeintrag durch einen Strom in zonenweiser Überstreichung des zu bearbeitenden Teils, **dadurch gekennzeichnet, dass** eine Detektion wenigstens eines Lichtstroms (33), der an den durch Überstreichen bearbeiteten Zonen (Z1, Z2; 60) des Teils (6) reflektiert wird, lokale Glanzniveaus (NB) liefert, die den Orientierungen von Lagen entsprechen, und dass wenigstens ein Steuerparameter (v_{B}) für die Veränderung der Tiefe des zu bearbeitenden Materials dann als Funktion der in den überstrichenen Zonen (Z1, Z2; 60) detektierten Lagen des Teils (6) durch ihr Glanzniveau (NB) und durch ihre relative Position in Bezug auf ein Grenzflächenniveau zwischen Lagen (0P, P2/P3, P3/P4) indexiert wird, wobei die Indexierung in Inkrementen (i1 bis i4; i5 bis i8), die in einem einen Referenzwert (v0) umgebenden Intervall im Voraus definiert werden und Materialschwund-Tiefengraden entsprechen, kalibriert wird, derart, dass die Glanzniveaus aufeinander folgender Überstreichungen zu einem Glanzgleichmaß mit konstanter Lage konvergieren.

2. Verfahren zum lagenweisen Bearbeiten nach Anspruch 1, wobei der Steuerparameter zwischen der Überstreichgeschwindigkeit (v_{B}), dem Schleifdurchsatz, der Überstreichungsschrittweite, der elektrischen Stärke der Steuerung des Energiestroms und dem durch den Energieeintrag gelieferten Druck gewählt wird.

3. Verfahren zum lagenweisen Bearbeiten nach Anspruch 2, wobei für jede Überstreichung ein Vergleich zwischen Glanzniveaus (NB) der durch die vorhergehende Überstreichung (Bₙ₋₁) bearbeiteten Oberfläche und vorgegebenen typologischen Korrespondenzdaten (BT) eine Typologie und Geschwindigkeitsindexierungen, die an diese Typologie angepasst sind, für die folgende Überstreichung (Bₙ) auswählt und/oder aktualisiert.

4. Verfahren zum lagenweisen Bearbeiten nach einem der Ansprüche 1 bis 3, wobei die Indexierungen des Steuerparameters einer gegebenen Überstreichung (Bₙ) mit Geschwindigkeitsindexierungen der vorhergehenden Überstreichung (Bₙ₋₁) verglichen werden und ein Halt (A) des Energiestroms ausgelöst werden kann, wenn eine Veränderung der Indexierung zwischen den Überstreichungen einen gegebenen maximalen Abstand überschreitet, vorzugsweise dann, wenn diese Veränderung einer Änderung des Glanzniveaus wenigstens einer Lage entspricht.

5. Verfahren zum lagenweisen Bearbeiten nach einem der vorhergehenden Ansprüche, wobei der Referenzwert (v₀) des Steuerparameters für eine gegebene Überstreichung ausgehend von dem Schwund-Nennwert einer Materiallage als Funktion der Gesamtheit der regulierten Indexierungen für wenigstens einen vorhergehenden Überstreichungsschritt modifizierbar ist.

6. Verfahren zum lagenweisen Bearbeiten nach einem der vorhergehenden Ansprüche, wobei die Detektion des Lichtstroms (33) polarisiert (35) ist, um ausreichend kontrastreiche Glanzdetektionen zu liefern, um lokalisierte Glanzniveau-Daten (NB-Daten) zu entwickeln, wobei die Gefahr eines Fehlers für verschiedene Orientierungen (-45, 0, +45) des Lichtstroms (33) minimiert wird.

7. Optimiertes Reparaturverfahren nach einem der vorhergehenden Ansprüche, wobei ein Halt (A) des Energieeintragstroms ausgelöst wird (A = 1), wenn der Wert des Steuerparameters lokal auf einen Wert reguliert wird, der sich außerhalb eines im Voraus definierten Intervalls befindet.

8. System (10) zum lagenweisen Bearbeiten von Fehlern (W1; N1) eines Teils (6, 6b, 6d) aus Verbundmaterial, das das Verfahren nach einem der vorhergehenden Ansprüche ausführen kann, **dadurch gekennzeichnet, dass** es eine digitale Datenverarbeitungseinheit (1) in Verbindung mit einer Steuerung (2) des Überstreichens einer Energieeintragmaschine (20) durch einen Strom in zu bearbeitende Zonen und eine Bilderzeugungsanordnung (3) umfasst, die wenigstens eine Lichtquelle (32) enthält, die dafür ausgelegt ist, einen Lichtstrom (33) auszusenden, der von einer bearbeiteten Oberfläche (60) des Teils (6, 6b, 6d) in wenigstens zwei verschiedenen Winkeln (-45°, 0°, +45°) in Bezug auf eine Referenzorientierung der Fasern jeder Lage (-1P, -2P, +1P, +2P; P1 bis P4) reflektiert werden kann, sowie ein Aufnahmemittel (31) für die Oberfläche (60) des Teils (6, 6b, 6d), die somit beleuchtet wird, umfasst, das mit der Datenverarbeitungseinheit (1) verbunden ist, um Glanzniveaus (NB) zu liefern, und dass die Verarbeitungseinheit (1) Mittel (11, 13) zum Regulieren der Indexierung der lokalen Überstreichgeschwindigkeiten des Teils (6, 6a, 6b) umfasst, wobei sich die Geschwindigkeiten in einem bestimmten Intervall (Δv) ändern, derart, dass die Glanzniveaus (NB) aufeinander folgender Überstreichungen, die von der Gesamtheit von Bildaufnahmen (3) geliefert werden, zu einer Glanzgleichmäßigkeit konvergieren, die derselben Tiefe in "Lageneinheiten" (0P, P2/P3, P3/P4) der bearbeiteten Zone entsprechen.

9. System (10) zum lagenweisen Bearbeiten nach dem vorhergehenden Anspruch, wobei die digitale Verarbeitungseinheit (1) Mittel (11) zum Vergleichen zwischen Glanzniveaus (NB) der durch die vorhergehende Überstreichung (Bₙ₋₁) bearbeiteten Oberfläche und vorgegebenen typologischen Korrespondenzdaten (BT) umfasst, wobei die Korrespondenzdaten (BT) und die Glanzniveau-Daten (NB) nach jeder Überstreichung in Speichermodulen (12, 14) der Verarbeitungseinheit (1) gespeichert werden.

10. System zum lagenweisen Bearbeiten nach einem der Ansprüche 8 oder 9, wobei eine Bibliothek (4) von Zustandsmodellen von Lagen von Teilen ein Referenzmodell (Mr) liefert, das mit dem bearbeiteten Teil vergleichbar ist, indem Glanzstellen verglichen werden, die nach den ersten Überstreichungen detektiert werden, wobei das Modell (Mr) an den Speicher (12) für typologische Korrespondenzdaten (BT) der digitalen Verarbeitungseinheit (1) übertragen wird.

11. System zum lagenweisen Bearbeiten nach einem der Ansprüche 8 bis 10, wobei das Aufnahmemittel ein digitaler Photoapparat (31) ist, wobei wenigstens zwei Photographien für zwei Winkelorientierungen der Lichtquelle (31), die zwei Orientierungen von Fasern von Lagen des Teils (6) entsprechen, ausgelöst werden.

12. System zum lagenweisen Bearbeiten nach einem der Ansprüche 8 bis 10, wobei das Aufnahmemittel wenigstens ein Objektiv enthält, das mit einem Polarisationsfilter (34) ausgerüstet ist.

## Claims

1. A method for the ply-by-ply machining of singularities (W1; N1; D4) of a component (6, 6b, 6d) made of composite material, composed of a stack of plies (P1 to P4; P5 to P8; Pa to Pc), by applying energy in a flow by an area-by-area sweep of the component to be machined, **characterized in that** the detection of at least one light flux (33) reflected from the areas (Z1, Z2; 60) machined by the sweeping of the component (6) provides local brightness levels (NB) correlated with ply orientations, and **in that** at least one parameter (v_{B}) for controlling the variation of depth of material to be machined is then indexed as a function of the plies of the component (6) detected in the swept areas (Z1, Z2; 60) by their brightness level (NB) and of their relative position with respect to an inter-ply interface level (0P, P2/P3, P3/P4), the indexing being calibrated by predefined increments (i1 to i4; i5 to i8) in a range including a reference value (v0) and correlated with degrees of depth of removal of material, so that the brightness levels of successive sweeps converge toward a uniformity of brightness when the ply is constant.

2. The method for ply-by-ply machining as claimed in claim 1, wherein the control parameter is chosen from among the sweep speed (v_{B}), the abrasive flow rate, the sweep step, the electric current controlling the energy flow, and the pressure provided by the application of energy.

3. The method for ply-by-ply machining as claimed in claim 2, wherein, for each sweep, a comparison between the brightness levels (NB) of the surface machined by the preceding sweep (Bₙ₋₁) and the predetermined typological correlation data (BT) selects and/or updates a typology and speed indexings adapted to this typology for the subsequent sweep (Bₙ).

4. The method for ply-by-ply machining as claimed in any of claims 1 to 3, wherein the indexings of the control parameter of a given sweep (Bₙ) are compared with the speed indexings of the preceding sweep (Bₙ₋₁), and the stopping (A) of the energy flow can be triggered if a variation of indexing between the sweeps locally exceeds a given maximum difference, preferably if this variation is correlated with a change of brightness level of at least one ply.

5. The method for ply-by-ply machining as claimed in any of the preceding claims, wherein the reference value (v₀) of the control parameter can be modified for a given sweep, starting from the nominal value for the removal of one ply of material as a function of the adjusted indexings for at least one preceding sweep step.

6. The method for ply-by-ply machining as claimed in any of the preceding claims, wherein the detection of luminous flux (33) is polarized (35) so as to provide brightness detection having sufficient contrast for the processing of the localized brightness level data (NB), while minimizing the risk of error for different orientations (-45, 0, +45) of the light flux (33).

7. An optimized repair method as claimed in any of the preceding claims, wherein the stopping (A) of the flow of energy application is triggered (A = 1) if the value of the control parameter is locally adjusted to a value outside a predefined range.

8. A system for the ply-by-ply machining (10) of defects (W1; N1) in a component (6, 6b, 6d) made of composite material, adapted to apply the method as claimed in any of the preceding claims, **characterized in that** it includes a digital data processing unit (1) connected to a sweep controller (2) of a machine for applying energy (20) in flows in the areas to be machined, and an image forming assembly (3) including at least one light source (32) arranged to emit a light flux (33) that can be reflected by a machined surface (60) of the component (6, 6b, 6d) at not less than two different angles (-45°, 0°, +45°) with respect to a reference orientation of the fibers of each ply (-1P, -2P, +1P, +2P; P1 to P4), together with a means of capturing views (31) of the surface (60) of the component (6, 6b, 6d) illuminated in this way, connected to the data processing unit (1) to provide brightness levels (NB), and **in that** the processing unit (1) includes means (11, 13) for adjusting the indexing of the speeds of local sweeps of the component (6, 6a, 6b), the speeds varying within a predetermined range (Δv) so that the brightness levels (NB) of the successive sweeps, provided by the image forming assembly (3), converge toward a uniformity of brightness correlated with the same depth in "ply units" (0P, P2/P3, P3/P4) of the machined area.

9. The system for ply-by-ply machining (10) as claimed in the preceding claim, wherein the digital processing unit (1) includes means for comparing (11) brightness levels (NB) of the surface machined by the preceding sweep (Bₙ₋₁) with predetermined typological correlation data (BT), the correlation data (BT) and brightness level data (NB) after each sweep being stored in memory modules (12, 14) of the processing unit (1).

10. The system for ply-by-ply machining as claimed in either of claims 8 and 9, wherein a library (4) of models of states of plies of components provides a reference model (Mr) resembling the component being processed according to the brightness detected after the first sweeps, the model (Mr) being sent to the typological correlation data (BT) memory (12) of the digital processing unit (1).

11. The system for ply-by-ply machining as claimed in any of claims 8 to 10, wherein the means for capturing views is a digital photographic apparatus (31), at least two photographs being taken for two angles of orientation of the light source (31) correlated with two orientations of ply fibers in the component (6).

12. A system ply-by-ply machining as claimed in any of claims 8 to 10, wherein the means for capturing views includes at least one lens fitted with a polarizing filter (34).
